Europäisches Patentamt

(19) European Patent Office

Office européen des brevets

(11) Publication number: **0 108 611**
**A2**

(12) # EUROPEAN PATENT APPLICATION

(21) Application number: **83306688.9**

(22) Date of filing: **03.11.83**

(51) Int. Cl.³: **C 01 B 33/18**

(30) Priority: **06.11.82 GB 8231752**

(43) Date of publication of application:
**16.05.84 Bulletin 84/20**

(84) Designated Contracting States:
**BE DE FR GB IT NL SE**

�splicant: **The British Petroleum Company p.l.c.**
**Britannic House Moor Lane**
**London EC2Y 9BU(GB)**

(72) Inventor: **Hyde, Edward Anthony**
**The British Petroleum Co. p.l.c. Chertsey Road**
**SUnbury-on-Thames Middlesex TW16 7LN(GB)**

(72) Inventor: **Young, Dennis**
**The British Petroleum Co. p.l.c. Chertsey Road**
**Sunbury-on-Thames Middlesex, TW16 7LN(GB)**

(74) Representative: **Krishnan, Suryanarayana**
**Kalyana et al,**
**BP INTERNATIONAL LIMITED Patents & Licensing**
**Division Chertsey Road**
**Sunbury-on-Thames Middlesex TW16 7LN(GB)**

(54) Improved synthesis of ultra-pure high crystallinity silicas.

㊿ This invention relates to an improved process for producing ultra-pure high crystallinity porous silicas by dealuminating a crystalline aluminosilicate, optionally in the presence of a silicon compound, and calcining the dealuminated product at a high temperature. The dealumination step may be carried out by steam treatment of the aluminosilicate. Unlike conventional processes the present invention does not rely on low alumina aluminosilicates produced from relatively expensive raw materials such as tetraalkyl ammonium hydroxides.

EP 0 108 611 A2

1

# IMPROVED SYNTHESIS OF ULTRA-PURE
# HIGH CRYSTALLINITY SILICAS

The present invention relates to an improved synthesis of ultra-pure high crystallinity porous silicas.

Hitherto such silicas have been produced directly from aluminium free starting materials and in some cases it is necessary to use the relatively expensive tetraalkyl ammonium species as starting material. Such processes are described for instance in USP 4016724 for silicalite, USP 4104294 for tetraethyl ammonium silicate and by Bibby, D.M. et al in Nature, 280 (No 5724), 664-665, 1979 for silicalite-II. In each of these cases, the silicas are relatively expensive to produce because of the need to use either aluminium-free starting materials or the tetraalkyl ammonium species or both. Good X-ray crystalline materials with low bulk aluminium contents can be prepared by such routes but it is reported that unless exceptional precautions are taken there can be residual aluminium in the framework structure (eg see Fyfe, C.A. et al, Nature, 1982, 296, pp 533-5). A particularly sensitive test used in the case of the MFI type zeolite structures is the resolution of the crystallographically distinct Si(zero Al) peaks of the $^{29}$Si MASNMR spectrum (Fyfe, C.A. et al loc.cit) which appears proportional to the purity of the $(SiO_2)_n$ framework. Thus siliceous materials which show highly resolved Si(zero Al) peaks can be called "ultra-pure"..

A further method of preparing highly siliceous porous materials is by dealumination, eg steaming and leaching of aluminosilicates as described in USP 3493519. However, it has proved difficult to prepare "ultra-pure" materials by this route. Silylation eg with silicon

1

tetrachloride has also been used (see USP 4273753 and Beyer, H.K. and Belenykaja, I., in "Catalysis by Zeolites", (Imelik, B. et al., eds), Elsevier, Amsterdam, 1980, p 203) but silicon tetrachloride is also relatively expensive and is limited to starting materials with pore structures which will allow diffusion of the relatively large silicon tetrachloride molecules therethrough.

It has now been found that ultra-pure highly crystalline porous silicas can be prepared by a high temperature thermal treatment of previously dealuminated aluminosilicates.

Accordingly, the present invention is a process for the production of ultra-pure, highly crystalline porous silicas from crystalline aluminosilicates which have a silica to alumina mole ratio of at least 2:1 characterised in that the aluminosilicate is subjected to a dealumination stage and the dealuminated product is subjected to a thermal treatment at a temperature above 650°C.

The aluminosilicates that may be used in the process of the present invention include crystalline aluminosilicates which have a silica to alumina mole ratio of at least 2:1, suitably from 5:1 to 1000:1, preferably from 10:1 to 300:1. Specific examples of the types of crystalline aluminosilicates that may be used include zeolites. Zeolites can be defined as natural or synthetic ordered porous crystalline aluminosilicates having a framework structure sufficiently open to accommodate at least water molecules. Such structures generally contain a regular array of small voids interconnected by channels or pores. The dimensions of the voids and channels can range from those of water to those of quite large molecules. For a given framework structure, the dimensions of the voids and channels are limited to a small number of values, which can vary from structure to structure. Zeolites are best characterised according to framework structure type, i.e. on the topology of the framework, irrespective of composition, distribution of different tetrahedral atoms, cell dimensions and symmetry. A code consisting of three capital letters has been adopted for each known structure type following the recommendations by IUPAC on zeolite nomenclature ("Chemical Nomenclature, and Formulation of Compositions, of Synthetic and

2

Natural Zeolites, "IUPAC yellow booket, 1978) and a compilation of 38 known zeolite structure types has been published by The Structure Commission of the International Zeolite Association ("Atlas of Zeolite Structure Types, By Meier, W M and Olsen, D H (1978), distributed by Polycrystal Book Service, Pittsburgh, Pa, USA). In addition to the groups classified by known structure type, there is a further group of crystalline zeolite materials whose X-ray diffraction patterns, sorption, ion-exchange and related properties indicate that they do not have known structure types but appear to have new, as yet undetermined structure types. An example of such a material is the novel porous crystalline aluminosilicate designated Theta-1 and described in our published copending European patent specification No 0057049. Other examples can be obtained from ZSM-12 (USP 3832449), ZSM-23 (USP 4076842), ZSM-38 (USP 4046859), ZSM-48 (European Patent Application 15132), EU-1 (European Patent Application 42226), EU-2 (GB Application 2077709), Nu-1 (USP 4060590), Nu-3 (European Patent Application 40016), Fu-1 (GB 1563345), ZSM-30 (European Patent Application 41621), MB 28 (European Patent Application 21445) and zeolite Beta (USP 3308069).

Resolution of crystallographically distinct peaks in the $^{29}$SiMASNMR spectrum is a suitable test for such ultra-pure, highly crystalline porous silicas. Such peaks are due to the crystallographically distinct silicon sites in the all silica version of a structure type. Some structure types, e.g. FAU (Meier, W M and Olsen D.H, loc.cit.) have only one crystallographically distinct silicon site in their all silica version. Thus this paricular test is not applicable to e.g. the FAU type structure though there is no intrinsic chemical reason why the procedures outlined above should not lead to ultra-pure, highly crystalline porous silicas having such structure types.

The initial dealumination of the aluminosilicate may be carried out by any of the conventional methods known in the art. These may include method where the aluminium species removed from the framework is at least partly replaced by silicon species inherently present in the aluminosilicate (often termed "healing") or by silicon species introduced from an external source in the course of the dealumination reaction (often termed "substitution"). Examples of known processes that may be used include those described for instance in (a) USP 3442795 (hydrolysis of aluminosilicate to detach some of the aluminium atoms from the crystal lattice and physically removing the detached aluminium atoms); (b) USP 4273753 (contacting the aluminosilicates with an inorganic halide or oxyhalide at a temperature high enough to volatilize the aluminium halide or oxyhalide formed; it is to be noted that if e.g. $SiCl_4$ is used, then concomittant substitution of aluminium by silicon in the framework can also occur); (c) USP 3591488 (subjecting the aluminosilicate to steam treatment at elevated temperature and removing amorphous alumina so formed by contacting with a dilute mineral acid or an organic chelating agent) and (d) European Patent Application 0082211 (subjecting the aluminosilicate to treatment with aqueous solutions of a fluorosilicate salt at controlled values of pH, temperature and concentration which leads to substitution of aluminium in the framework by silicon). The precise treatment(s) chosen will depend upon the structure type, composition and crystalline order of the starting material. Generally, structures with lower $SiO_2:Al_2O_3$ ratios will require milder treatments to avoid structural collapse. In some cases a combination of treatments will be most appropriate.

Of these the type of dealumination process described in USP 3591488 is preferred. That is, the aluminosilicate is initially subjected to a steaming step which is followed subsequently by a washing step with a dilute acid or a chelating agent. The steaming step is carried out by passing a gaseous stream containing from 1 to 100% steam over the aluminosilicate at a temperature from 400 to 750°C for a duration of from 5 minutes to 60 days. The gaseous stream containing steam may contain one or more carrier gases which are inert under the dealumination conditions with respect to the silica product, ie those which do not leave any deposits which can adversely affect the properties of the final product. The pressure used for this steaming step is suitably from 0.1 to 10 bar. In a more preferred embodiment, the steaming step is carried out by passing a gaseous stream containing from 20 to 100% steam, at a temperature from 530° to 650°C for a period of between 1 and 10 hours and at a pressure of 1 bar absolute.

The carrier gas used is preferably selected from one or more of air, oxygen, nitrogen, the noble gases and hydrogen. It should be noted that gases such as methane and carbon tetrachloride which tend to deposit carbon or other elements should be avoided.

The steaming step is preferably carried out on an aluminosilicate free of exchanged metal cations. This can be conveniently achieved by one or more acid or ammonium washes prior to steaming. Obviously care must be taken to avoid structural collapse during washing and steaming. Thus, for example, aluminosilicates with low silica to alumina ratios should not be washed under low pH conditions and are preferably initially steamed after only partial exchange of metal cations.

It would be clear to those skilled in the art that within the ranges of steaming conditions and parameters specified an increase in the severity of one or more parameters will allow a corresponding reduction in one or more of the remaining parameters. The steaming step may be repeated more than once as necessary.

The washing step, which follows the steaming step is suitably carried out by bringing into contact the steam-treated aluminosilicate with an agent capable of dissolving or chelating trivalent aluminium released from the lattice framework of the crystalline aluminosilicate during the steaming step. This may be achieved by washing the aluminosilicate resulting from the steaming step with a solution containing one or more agents selected from ammonium compounds, acids and a chelating agent. Examples of complexing agents which are extremely effective in carrying out the process of the present invention include (but are not restricted to) EDTA (ethylediaminetetraacetic acid); di(tetraethyl ammonium) dihydrogen EDTA; diammonium dihydrogen EDTA; ammonium and manganese EDTA; fluorides, such as sodium or ammonium fluoride; carboxylic and polycarboxylic acids and acid salts, such as citric acid and ammonium acid citrate; mixtures of such complexing agents; etc.

Various other complexing agents, containing a variety of anionic portions, may also be used in the process of the present invention provided they meet the criteria set forth hereinbefore. For a comprehensive review of complexing agents, see "Organic Sequestering Agents" by Stanley Chaberek and Arthur E. Martell, published by John Wiley and Sons, Inc., New York (1959), and an article entitled "Chelation" by Harold F. Walton, Scientific American, June 1953, pp 68-76.

The agent capable of dissolving or chelating the trivalent aluminium is suitably used in a molar concentration of from 0.01 to 5 preferably from 0.1 to 1. The washing step is suitably carried out by bringing the steam-treated aluminosilicate into contact with the agent between room and reflux temperatures of the solution for a period of 0.5 to 16 hours preferably 1-4 hours. As would be evident, the higher the temperature the shorter the contact time. The washing step may be repeated more than once as is necessary.

The combined steaming and washing steps may be repeated more than once as is necessary.

The dealuminated product so formed is then subjected to a thermal treatment preferably at a temperature from 650° to 1400°C or higher, provided the temperature is not sufficient to destroy the porous crystalline structure of the dealuminated product, to produce the ultra-pure high crystallinity silica. By 'destruction of porous crystalline structure' is meant that the heating within the specified temperature range should be controlled so as to avoid transition to denser crystalline or amorphous, solid or liquid phases e.g. conversion to quartz or melting. The thermal treatment is suitably carried out at a temperature from 800° to 1300°C at a pressure of 1 bar absolute. The thermal treatment is suitably carried out in a dry, gaseous atmosphere. The dry gaseous atmosphere should be inert under the reaction conditions. By "inert" is meant gases which do not deposit carbon on other elements under the thermal treatment conditions. Examples of suitable gases which may be used include dry air, nitrogen, hydrogen, the noble gases and oxygen. Dry air is preferred. The thermal treatment is suitably carried out for a duration of from 5 minutes to 60 days.

The resultant product after thermal treatment is the ultra-pure high crystallinity porous silica which is substantially free from aluminium atoms or compounds. Such porous silicas are valuable selective sorbents and catalyst supports.

The process of the present invention is cheaper, more flexible, and capable of consistently reproducing the ultra-pure high crystallinity porous silicas than the processes used hitherto. In particular, the process is effective for producing MFI type silicas (also known as silicalite).

The present invention is further illustrated with reference to the following Examples.

Example 1

(a) MFI-type Zeolite Synthesis

In the synthesis of the MFI-type zeolite the following reactants were used:

| | |
|---|---|
| Sodium hydroxide | 14.7g |
| Sodium aluminate | 44.7g |
| Diethanolamine | 289.9g |
| Ludox AS 40 | 849.9g (40% w/w colloidal silica) |
| (Registered Trade Mark) | |
| Deionised water | 1018.4g |

Sodium hydroxide and sodium aluminate were dissolved in deionised water (350g) by warming and stirring for 10 minutes. The solution was then filtered and placed in a 3-litre flask. Diethanolamine was melted and added to this solution and the whole stirred for 10 minutes maintaining the temperature at 40°C. The colloidal silica was then diluted with the remainder of the deionised water (678.4g) and then slowly added to the mixture in the flask, over a period of 1 hour. During this addition the temperature was maintained at 40°C and the mixture, which gradually thickened, stirred continuously. Stirring was continued for 0.5 hr after the silica had been added. The mixture was charged to a 3-litre rocking autoclave which was agitated for 4 hours while the temperature was raised to 175°C. The autoclave was then agitated at this temperature for 7 days. Thereafter the autoclave was opened and the white cyrstalline zeolite which had formed was separated from the mother liquor by filtration.

(b)  Pre-treatment of Zeolite

The crystalline zeolite was then washed thoroughly first with deionised water and then with a 10% nitric acid solution.  Thereafter the acid treated zeolite was washed thorougly with deionised water to remove any traces of acid.  This was then dried in an oven at 100°C for 16 hours.

The acid-washed zeolite had bulk silicon to aluminium molar ratio of 15.3:1 and the framework silicon to aluminium molar ratio measured by $^{29}$SiMASNMR spectroscopy was 19:1.

(c)  Steam Treatment

About 20 gms of this MFI-type zeolite in its acid washed form was first steam-treated as follows:

The zeolite was brought into contact with steam at 580°C for 60 hours and then cooled.

The resulting steam-treated zeolite was then subjected to washing-step.

(d)  Washing Step

The washing step was carried out by first contacting the steam treated material with approximately 10% (w/w) nitric acid solution (106 ml) under reflux for 2.5 hours which was then filtered, washed with distilled water and then dried at 100°C for 16 hours.

The resultant dried product was then washed for a second time by contacting with 0.67 molar ammonium nitrate solution (100 ml) under reflux for 4 hours.  The refluxed material was then washed with distilled water and then dried at 100°C to give a dealuminated product.

(e)  Thermal Treatment

The dealuminated product was finally subjected to a thermal treatment step.  This involved heating the dealuminated product at 1160°C for 16 hours in flowing air after which period it was cooled.

Examination of the thermally treated product by $^{29}$Si MASNMR spectroscopy revealed a spectrum which showed no evidence of any framework aluminium in the product.  The spectrum showed highly resolved and crystallographically distinct Si(zero Al) peaks consistent with ultra-pure highly crystalline silicalite. This fine structure was absent both in the as prepared zeolite after step (b) above and in the steamed/washed zeolite after steps (c) and (d) above.

Example 2

(a) MFI-type zeolite synthesis

In the synthesis of the MFI-type zeolite the following reactants were used.

| Sodium hydroxide | 12.8g |
| Sodium aluminate | 42.3g |
| Diethanolamine | 312.7g |
| Ludox AS40 | 851.5g |
| (Registered Trade Mark) | |
| Distilled water | 1013.3g |

Sodium hydroxide and sodium aluminate were dissolved in distilled water (339.3g) by warming and stirring for 10 minutes. The solution was placed in a 3-litre flask. Diethanolamine was melted and added to this solution and the whole stirred for 10 minutes maintaining the temperature at 40°C. The colloidal silica was then diluted with the remainder of the deionised water (674.0g) and then slowly added to the mixture in the flask, over a period of 1 hour. During this addition the temperature was maintained at 40°C and the mixture, which gradually thickened, stirred continuously. Stirring was continued for 0.5 hours after the silica had been added. The mixture was charged to a 3-litre rocking autoclave which was agitated while the temperature was raised to 172°C. The autoclave was then agitated at this temperature for 7 days. Thereafter the autoclave was opened and the while crystalline zeolite which had formed was separated from the mother liquor by filtration. The zeolite was dried at 100°C in air for 16 hours.

(b) Pre-treatment of Zeolite

The crystalline zeolite was washed thoroughly with a 10% nitric acid solution, then dried in an oven at 100°C for 16 hours.

The acid-washed zeolite had bulk silicon to aluminium molar ratio of 16.9:1 and the framework silicon to aluminium molar ratio measured

by $^{29}$Si MASNMR spectroscopy was 25:1.

About 50g of this zeolite was heated to 540°C at a rate of 40°C an hour and maintained at this temperature for 60 hours then cooled. The calcined zeolite was contacted with approximately 10% (w/w) nitric acid solution (350 ml) under reflux for 3 hours. The mixture was then filtered and the zeolite residue washed with distilled water and then dried at 100°C for 16 hours. The dried product was contacted with 0.68 molar ammonium nitrate solution (350 ml) under reflux for 5 hours. The mixture was then filtered and the zeolite residue washed with distilled water and the dried at 100°C for 16 hours.

(c) Steam Treatment and Washing

About 20g of this MFI-type zeolite was steam-treated 5 times as follows.

Each time the zeolite was brought into contact with steam (20% volume) at about 600 to 640°C for 2 to 5 hours then cooled.

After each steam treatment the zeolite was subjected to washing-steps.

After the first steam treatment the zeolite was contacted with 10% (w/w) nitric acid solution under reflux twice, then with 40% (w/w) nitric acid solution under reflux eight times. After filtering for the last time the zeolite residue was washed with distilled water and then dried at 100°C for 16 hours.

After the second, third and fourth steam treatments the zeolite was contacted, each time, with iminodiacetic acid (approximately 5g) in refluxing distilled water (125ml) for 24 hours and then filtered. The zeolite residue was washed each time with distilled water and then dried at 100°C for 16 hours.

After the fifth steam treatment the zeolite was contacted with $(NH_4)_2H_2EDTA$ (4.9g) in refluxing distilled water (120ml) for 4 hours and then filtered. The zeolite residue was wahsed with distilled water and then dried at 100°C for 16 hours.

(d) Thermal Treatment

The dealuminated product was finally subjected to a thermal treatment step. This involved heating the dealuminated product to 800°C at a rate of 40°C an hour and maintaining this temperature for 26 hours in flowing air after which period it was cooled.

Examination of the thermally treated product by $^{29}$Si MASNMR spectroscopy revealed a spectrum which showed no evidence of any framework aluminium in the product. The spectrum showed well resovled and crystallographically distrinct Si(zero Al) peaks consistent with ultra-pure highly crystalline silicalite. This fine structure was absent both in the as prepared zeolite after step (b) above and in the steamed and washed zeolite after step (c) above.

Example 3

(a)  Theta-1 was prepared according to European Patent Application No. 0057049 and pretreated according to methods described therein. The framework silicon to aluminium molar ratio measured by $^{29}$Si MASNMR spectroscopy was $(52 \pm 10):1$.

(b)  Steam Treatment and Washing

A sample of this zeolite was brought into contact with steam (20% volume) at 590°C for 19 hours and the cooled.

The resulting steam-treated zeolite was subjected to a washing step by contacting it with approximately 10% (w/w) nitric acid solution (100ml) at about 80°C for 6.5 hours then filtering. The zeolite reside was washed with distilled water and then dried at 100°C for 16 hours.

(c)  Thermal Treatment

The dealuminated product was subjected to a thermal treatment step. This inolved heating the dealuminated product to 800°C at a rate of 40°C an hour, and maintaining this temperature for 50 hours in air after which period it was cooled.

Examination of the thermally treated product by $^{29}$Si MASNMR spectroscopy revealed a spectrum which showed no evidence of any framework aluminium in the product. The spectrum showed three well resolved and crystallographicically distinct Si(zero Al) peaks indicative of a highly silicon-rich framework. This fine structure was absent both after steps(a) and (b).

Claims

1. A process for the production of ultra-pure, highly crystalline porous silicas from crystalline aluminosilicates which have a silica to alumina mole ratio of at least 2:1 characterised in that the aluminosilicate is subjected to a dealumination stage and the dealuminated product is subjected to a thermal treatment at a temperature above 650°C.

2. A process according to claim 1 wherein the aluminosilicate has MFI or Theta-1 structure types.

3. A process according to claims 1 or 2 wherein the dealumination of the aluminosilicate is carried out by initially subjecting the aluminosilicate to a steaming step which is followed subsequently by a washing step with a dilute acid or a chelating agent.

4. A process according to claim 3 wherein the steaming step is carried out by passing a gaseous stream containing from 1 to 100% steam over the aluminosilicate at a temperature from 400 to 750°C and a pressure of 0.1 to 10 bar for a duration of 5 minutes to 60 days.

5. A process according to any one of the preceding claims wherein the steaming step is carried out on an aluminosilicate free of exchanged metal cations.

6. A process according to any one the preceding claims 3 to 5 wherein the washing step, which follows the steaming step is carried out by bringing into contact the steam-treated aluminosilicate with an agent capable of dissolving or chelating trivalent aluminium released from the lattice framework of the crystalline aluminosilicate during the steaming step.

7. A process according to any one of the preceding claims wherein the washing of the aluminosilicate resulting from the steaming step is carried out with a solution containing one or more agents selected from EDTA (ethylediaminetetraacetic acid); di(tetraethyl ammonium) dihydrogen EDTA: diammonium dihydrogen EDTA; ammonium and manganese EDTA; fluorides, carboxylic and polycarboxylic acids and acid salts; a complexing resin which contains an iminodiacetate functional group and mixtures thereof.

8. A process according to claim 1 or 2 wherein the dealumination is carried out by treating the aluminosilicate with a compound of silicon introduced into the dealumination reaction mixture from an external source.

9. A process according to claim 8 wherein the silicon compound is a fluorosilicate.

10. A process according to any one the preceding claims wherein the dealuminated product is subjected to thermal treatment at a temperature from 650°C to 1400°C which is insufficient to destroy the porous crystallinity of the dealuminated product.

11. A process according to claim 10 wherein the thermal treatment is carried out at a temperature from 800°C to 1300°C at a pressure of 1 bar absolute.

12. A process according to any one of the preceding claims wherein the thermal treatment is carried out in a dry, gaseous atmosphere.